Europäisches Patentamt

European Patent Office

Office européen des brevets

(11) Publication number: **0 335 350 B1**

# EUROPEAN PATENT SPECIFICATION

(45) Date of publication of patent specification: **11.08.93**    (51) Int. Cl.5: **C09D 5/10**, C09D 1/00, C09D 201/10

(21) Application number: **89105494.2**

(22) Date of filing: **29.03.89**

(54) **Temporary rust resisting coating composition.**

(30) Priority: **31.03.88 JP 79232/88**

(43) Date of publication of application:
**04.10.89 Bulletin 89/40**

(45) Publication of the grant of the patent:
**11.08.93 Bulletin 93/32**

(84) Designated Contracting States:
**DE FR GB IT NL**

(56) References cited:
**EP-A- 0 141 381**
**EP-A- 0 196 835**

(73) Proprietor: **NIPPON PAINT CO., LTD.**
**2-1-2, Oyodokita Kita-ku**
**Osaka-shi Osaka 530(JP)**

(72) Inventor: **Tanaka, Masatoshi**
**6-1-12-202, Nakayamasatsukidai**
**Takarazuka-shi Hyogo-ken(JP)**
Inventor: **Fukuda, Hideo**
**3-447, Ikejiri**
**Itami-shi Hyogo-ken(JP)**
Inventor: **Mizohata, Koji**
**2-6-39-205, Satsukigaoka**
**Ikeda-shi Osaka-fu(JP)**

(74) Representative: **Hansen, Bernd, Dr.rer.nat. et al**
**Hoffmann, Eitle & Partner, Patentanwälte,**
**Postfach 81 04 20**
**W-8000 München 81 (DE)**

**Description**

The present invention relates to a temporary rust resisting coating composition which has excellent good heat resistance and weldability.

There has been known plenty of anti corrosive paint which contains rust resisting pigments. Among them, zinc rich paint which contains much amount of zinc powder and a binder is widely used for temporary rust resisting paint of large steel structure, such as ships, bridges and the like, because of excellent rust resistance. It is believed that the rust resistance of the zinc rich paint is brought about from the sacrificial corrosion of zinc powder caused by electro-chemical reaction with steel, and from the shut-off of water and oxygen due to the corrosion product of zinc powder.

However, the zinc rich paint has some defects. Although, increased amounts of zinc powder increase the sacrificial corrosion so as to enhance rust resistance, they also increase white rust of zinc powder so as to reduce adhesion properties with an over-coating composition coated thereon. If the amount of zinc powder is lowered, the sacrificial corrosion becomes insufficient. Also, at a portion where is heated to an elevated temperature, such as the opposite surface of welding or smoothing, the components in the coating volatilize or decompose by heat, so that the cracking of the coating occurs. Thus, the rust resistance declines. Accordingly, although large steel structures are coated by temporary rust resisting paint, surface preparation before over-coating is essential because they are welded or smoothed in many portions.

A coating composition which contains zinc powder in a small amount and exhibits excellent rust resistance even in the portions heated at an elevated temperature is therefore desired.

In order to develop such a coating composition, many techniques have been proposed.

JP 158785/1983 discloses a rust resisting coating composition which comprises a hydrolyzed initial condensate of tetraalkoxysilane and a hydrolyzed initial condensate of alkyltrialkoxysilane as a binder.

JP 93540/1984 discloses a temporary rust resisting coating composition which comprises a hydrolyzed initial condensate of tetraalkoxysilane and an acidic solvent-dispersible colloidal silica.

JP 199205/1984 discloses a rust resisting coating composition, wherein zinc powder covered with electro-conductive particles are incorporated.

JP 281719/1985 discloses a temporary rust resisting coating composition which contains zinc powder having an average particle size of 5 to 10 microns, of which more than 95% are zinc particles having a particle size of 2 microns or more.

These techniques are quite satisfactory, but under some heating conditions, they do not have excellent properties.

SUMMARY OF THE INVENTION

The present invention provides a temporary rust resisting coating composition which has excellent rust resistance after heating even at more than 600 °C and which has good weldability. The temporary rust resisting coating composition of the present invention comprises

(A) 10 to 25% by weight of a binder having an ignition loss of not more than 33% by weight, wherein said binder (A) is a mixture of a solvent type colloidal silica ($a_2$) and a hydrolyzate ($a_1$) of the compound having the formula

$$(R_1)_m Si(OR_2)_{4-m}$$

[$R_1$ and $R_2$ which are the same or different are an alkyl group having 1 to 5 carbon atoms, m is 0 or 1] in a weight ratio ($a_1/a_2$) of 85/15 to 30/70 based on $SiO_2$,
(B) 40 to 70 % by weight of zinc powder,
(C) 5 to 50 % by weight of an inorganic oxide pigment which has been heated at not less than 500 °C up to an ignition loss of 3 % by weight;
the amounts of the components (A), (B) and (C) being based on a dried film.

The binder (A) is anyone known to the art which has an ignition loss of not more than 33 % by weight, preferably 30 to 20 % by weight. Examples of the binders are a hydrolyzate of tetra- and/or alkyltrialkoxysilane, especially a hydrolyzate of the compound of the formula

$$(R_1)_m Si(OR_2)_{4-m}$$

[$R_1$ and $R_2$, which are the same or different, also an alkyl group having 1 to 5 carbon atoms, m is 0 or 1.]

such as tetramethoxysilane, tetraethoxysilane, tetrapropoxysilane, methyltrimethoxysilane, methyltriethoxysilane, methyltripropoxysilane, ethyltrimethoxysilane, ethyltriethoxysilane and a mixture thereof; solvent type colloidal silica; water-dispersible colloidal silica; alkali silicate; and a mixture thereof. Preferred for improving weldability in addition to heat resistance is a mixture of tetra- and/or alkyltrialkoxysilane and solvent type colloidal silica in a weight ratio (alkoxysilane/colloidal silica) of 85/15 to 30/70 based on $SiO_2$. Japanese Kokai Publication (unexamined) 93540/1984 discloses a mixture of tetraalkoxysilane and solvent type colloidal silica, and a mixture of tetraalkoxysilane, alkyltrialkoxysilane and solvent type colloidal silica. The binder (A) is generally present in the coating composition of the present invention in an amount of 10 to 25 % by weight, preferably 10 to 20 % by weight based on the weight of a dried film. Amounts of less than 10 % by weight deteriorate film properties, thus resulting in decline of heat resistance and rust resistance. If the binder is contained more than 25 % by weight, when the polymerization is proceeded at an elevated temperature, much gas is produced which often destroys cured film.

Any zinc powder can be used for the coating composition of the present invention. Preferably, zinc powder may have a particle size of 1 to 20 micrometer, preferably 3 to 10 micrometer. It can be alloy of zinc and other metals, such as iron, calcium, sodium, potassium and aluminum. An amount of zinc powder can be 40 to 70 % by weight, preferably 40 to 60 % by weight based on a dried film. Amounts of less than 40 % by weight reduce rust resistance. Amounts of more than 70 % by weight increase white rust to result in lowering the adhesion properties to an over coat. Also, more amounts of zinc powder adversely effects on weldability on high speed welding.

The inorganic oxide pigment of the present invention is required to be heated at not less than 500 °C and continued up to an ignition loss of 3 % by weight, preferably up to 1 %by weight. Heating can be carried out in the air by using an electric furnace, because the pigment inherently is stable even in the air. The pigment can be either natural products or synthetic products, but preferably natural products in view of economical reasons, such as clay, talc, mica and the like. Preferred is clay, because the obtained film has good and rust resistance. A particle size of the pigment is not limited, but preferably not more than 20 micrometer for smooth surface. Grinding of the pigment can be carried out before or after the heating treatment. If the grinding is carried out after heating, dry grinding is preferred.

The coating composition of the present invention may contain other pigments, solvents and additives, in addition to the above mentioned components, if necessary. Typical examples of the other pigments are corrosion preventative pigments, color pigments or metal powder pigments, such as zinc oxide, titanium white, iron oxide, ultramarine blue, chromium green, zinc phosphate, aluminum phosphate, barium metaborate, zinc molybdate, calcium silicate, ferroalloy and the like. Typical examples of the solvents are isopropyl alcohol, n-butyl alcohol, isobutyl alcohol, ethyleneglycol monobutyl ether, ethyleneglycol monoethyl ether, xylene, toluene and the like. An amount of the solvent can be varied in view of coating workability and drying process. Typical examples of the additives are an anti-sagging agent, a wetting agent, a reaction promoter, an antiflooding agent, an adhesion promoting agent, an anti-setting agent and the like.

The coating composition of the present invention can be prepared by an art-known method. The composition can generally be divided into two-packages, one of which contains powder components and the other contains solid components. It is also divided into a package containing components which react with a binder, and the other package containing a binder and the other components which do not react with the binder. That can be manufactured by using a disper, a homogenizer, a roll mill, a sand mill, a ball mill and the like. Just before applying, both packages are mixed sufficiently. The coating composition can apply spray coating, roll coating, brushing and the like. A substrate to be coated can be anything made from steel, especially steel structures. The coating composition is dried by air or hot air.

It is desired that the temporary rust resisting coating composition has a heat resistance of more than 800 °C, preferably of more than 500 °C. The heat resistance can be attained by many factors, such as choice of binders, choice of additives and the like. The heat loss of the dried coating is not more than 8 %, preferably not more than 5 %.

The coating composition of the present invention has excellent rust resistance, even an opposite side of a portion where welding or smoothing is conducted. A surface which is coated with the coating composition of the present invention can be welded without defects by a high speed (80-100cm/min) welding, such as a gas shielded metal arc welding.

EXAMPLES

The present invention is illustrated by the following Examples which are not to be construed as limiting the invention to their details. In the Examples, all % are based on weight, unless otherwise specified.

Preparation of Binder A

Binder A, a hydrolyzate of tetraalkoxysilane, was prepared by the following components.

| Ingredients | Parts by weight |
|---|---|
| Tetraethoxysilane (Ethylsilicate 28 available from Nippon Colcoat Co, Ltd.) | 100 |
| Isobutyl alcohol | 50 |
| Isopropyl alcohol | 24.7 |
| Water | 16.6 |
| 0.1 N Hydrochloric acid | 0.7 |

The above ingredients were mixed to obtain Binder A having a heat residue of 23 % by weight (110 °C for 3 hours) and an ignition residue of 15 % by weight (800 °C for one hour). It also had an ignition loss of 35 % by weight based on a dried film.

Preparation of Binder B

Binder B, a hydrolyzate of a mixture of tetraalkoxysilane and alkyltrialkoxysilane, was prepared by the following components.

| Ingredients | Parts by weight |
|---|---|
| Tetraethoxysilane (Ethylsilicate 28 available from Nippon Colcoat Co, Ltd.) | 208.3 |
| Methyltriethoxysilane | 106.4 |
| Isobutyl alcohol | 130 |
| Isopropyl alcohol | 169.9 |
| Water | 49.9 |
| 0.1 N Hydrochloric acid | 2.2 |

The above ingredients were mixed to obtain Binder B having a heat residue of 25 % by weight (110 °C for 3 hours) and an ignition residue of 17 % by weight (800 °C for one hour). It also had an ignition loss of 32 % by weight based on a dried film.

Preparation of Binder C

Solvent type colloidal silica (50 % dilute solution of methanol silicasol (Nissan Chemical Industries, Ltd.) with isopropyl alcohol) was used as Binder C. Binder C had a heat residue of 16 % by weight (110 °C for 3 hours) and an ignition residue of 15 % by weight (800 °C for one hour). It also had an ignition loss of 6 % by weight based on a dried film.

4

Examples 1 to 7 and Comparative Examples 1 to 3

The components shown in Table 1 were mixed to obtain coating compositions.

Table 1

| | Examples | | | | | | | Comparative Examples | | |
|---|---|---|---|---|---|---|---|---|---|---|
| | 1 | 2 | 3 | 4 | 5 | 6 | 7 | 1 | 2 | 3 |
| Binder A (1) | 25.0 | 25.0 | 40.0 | 20.0 | 25.0 | 20.0 | | 50.0 | 50.0 | 25.0 |
| Binder B | | | | | | 30.0 | 25.0 | | | 25.0 |
| Binder C | 25.0 | 25.0 | 10.0 | 20.0 | 35.0 | | 25.0 | | | |
| Zinc powder | 25.0 | 35.0 | 30.0 | 40.0 | 35.0 | 30.0 | 35.0 | 25.0 | 25.0 | 25.0 |
| Calcined clay | 24.5 | 14.5 | 19.5 | 14.5 | | | | | 24.5 | |
| Calcined talc | | | | | 4.5 | 14.5 | 14.5 | | | |
| Zinc molybdated | | | | | | | | | | |
| Aluminum phosphate | | | | 5.0 | | 5.0 | | | | |
| Anti-sagging agent | | | | | | | | 0.5 | | 0.5 |
| Normal clay | 0.5 | 0.5 | 0.5 | 0.5 | 0.5 | 0.5 | 0.5 | 24.5 | 0.5 | 24.5 |
| Binder (film) (2) | 16 | 16 | 18 | 12 | 22 | 15 | 17 | 19 | 19 | 16 |
| Zn (film) | 42 | 59 | 49 | 59 | 68 | 50 | 58 | 41 | 41 | 42 |
| Ignited pigment | 41 | 24 | 32 | 21 | 9 | 24 | 24 | 0 | 40 | 0 |
| The others | 1 | 1 | 1 | 8 | 1 | 11 | 1 | 40 | 1 | 42 |
| Ignited loss (binder) | 24 | 24 | 31 | 24 | 22 | 21 | 28 | 35 | 35 | 24 |
| Ignited loss (film) | 4 | 4 | 6 | 3 | 5 | 5 | 5 | 12 | 7 | 10 |
| Exposure test Room drying | 9 | 10 | 10 | 10 | 10 | 10 | 9 | 9 | 10 | 10 |
| 600 °C | 8 | 9 | 8 | 9 | 9 | 7 | 8 | 4 | 4 | 5 |
| 800 °C | 7 | 8 | 7 | 8 | 6 | 6 | 7 | 2 | 3 | 2 |
| Welding test Appearance defects (%) | 0 | 0 | 0 | 0 | 0 | 0 | 0 | 40 | 15 | 30 |
| Blow holes (grade) | 1 | 1 | 1 | 1 | 1 | 1 | 2 | 4 | 3 | 4 |

(1) Based on the liquid composition

(2) Based on the dried film

(1) Exposure test

The coating composition was applied to a sandblasted steel panel by an air spray coating in a dried film thickness of 15±2 micrometer, and naturally dried at 20 °C and a relative humidity of 75 % for 7 days. It was then heated at 600 °C or 800 °C for 10 minutes and cooled. The obtained panel was subjected to a rust resistant test in which the panel was left for 6 months at a sea side (Tamano-shi, Okayama-ken, Japan) and red rust was evaluated according to ASTM D 610.

(2) Weldability test

The coating composition was applied both side to two shotblasted steel panels (12 X 150 X 700 mm) by an air spray coating and naturally dried at room temprature for 7 days. One of the panels (panel A) was coated in a dried film thickness of 15±2 micrometer and the other (panel B) was coated in a dried film thickness of 30±3 micrometer. The panel A was mechanically sheared at its end and connected with the panel B and level-fillet welded by a carbon dioxide gas shielded metal arc welding method at a speed of 90 cm/min, using a welding wire SF-1 (Nittetsu Welding Industries Co. Ltd.). Appearance defects were evaluated by a total length of gas depression. Blow holes were evaluated according to JIS Z 3104.

As is apparent from Table 1, the coating composition has excellent rust resistance after heating at 600 °C or 800 °C. It also exhibits good weldability for a high speed welding which is two times more than a conventional welding.

**Claims**

1. A temporary rust resisting coating composition which comprises:

(A) 10 to 25% by weight of a binder having an ignition loss of not more than 33% by weight, wherein said binder (A) is a mixture of a solvent type colloidal silica ($a_2$) and a hydrolyzate ($a_1$) of the compound having the formula

$$(R_1)_mSi(OR_2)_{4-m}$$

[$R_1$ and $R_2$ which are the same or different are an alkyl group having 1 to 5 carbon atoms, m is 0 or 1] in a weight ratio ($a_1/a_2$) of 85/15 to 30/70 based on $SiO_2$,
(B) 40 to 70 % by weight of zinc powder,
(C) 5 to 50 % by weight of an inorganic oxide pigment which has been heated at not less than 500 °C up to an ignition loss of 3 % by weight;
the amounts of the components (A), (B) and (C) being based on a dried film.

2. The coating composition according to Claim 1, wherein said zinc powder has a particle size of 1 to 20 micrometers.

3. The coating composition according to Claim 1, wherein said zinc powder is alloy of zinc and other metals.

4. The coating composition according to Claim 1, wherein said inorganic oxide pigment is clay, talc or mica.

5. The coating composition according to Claim 1, wherein said inorganic oxide pigment has a particle size of not more than 20 micrometers.

6. The coating composition according to Claim 1, wherein said dried film has an ignition loss, at the deoxgenated condition for 1 hour, of not more than 8%.

**Patentansprüche**

1. Zeitweilig rostwiderstandsfähige Beschichtungs-Zusammensetzung, umfassend
(A) 10 bis 25 Gew.% eines Bindemittels mit einem Glühverlust von nicht mehr als 33 Gew.%, wobei dieses Bindemittel (A) eine Mischung eines kolloidalen Siliciumdioxids vom Lösungsmitteltyp ($a_2$) und eines Hydrolysats ($a_1$) der Verbindung der Formel

$(R_1)_m Si(OR_2)_{4-m}$

($R_1$ und $R_2$, die gleich oder verschieden sind, bedeuten eine Alkylgruppe mit 1 bis 5 Kohlenstoffatomen, m ist 0 oder 1) mit einem Gewichtsverhältnis ($a_1/a_2$) von 85/15 bis 30/70, in bezug auf $SiO_2$, ist;
(B) 40 bis 70 Gew.% Zinkpulver;
(C) 5 bis 50 Gew.% eines anorganischen Oxidpigments, das auf nicht weniger als 500°C bis zu einem Glühverlust von 3 Gew.% erhitzt wurde,
wobei die Mengen der Komponenten (A), (B) und (C) auf einen Trockenfilm bezogen sind.

2. Beschichtungs-Zusammensetzung nach Anspruch 1, wobei das Zinkpulver eine Teilchengrösse von 1 bis 20 $\mu$m besitzt.

3. Beschichtungs-Zusammensetzung nach Anspruch 1, wobei das Zinkpulver eine Legierung von Zink und anderen Metallen ist.

4. Beschichtungs-Zusammensetzung nach Anspruch 1, wobei das anorganische Oxidpigment Ton, Talk oder Mika ist.

5. Beschichtungs-Zusammensetzung nach Anspruch 1, wobei das anorganische Oxidpigment eine Teilchengrösse von nicht mehr als 20 $\mu$m besitzt.

6. Beschichtungs-Zusammensetzung nach Anspruch 1, wobei der Trockenfilm einen Glühverlust von nicht mehr als 8 % bei deoxygenierter Bedingung während 1 Stunde aufweist.

**Revendications**

1. Composition de revêtement résistant temporairement à la corrosion, qui comprend :
(A) 10 à 25 % en poids d'un liant ayant une perte au feu ne dépassant pas 33 % en poids, ledit liant (A) étant un mélange d'une silice colloïdale de type solvant ($a_2$) et d'un hydrolysat ($a_1$) du composé de formule

$(R_1)_m Si(OR_2)_{4-m}$

[$R_1$ et $R_2$ qui sont identiques ou différents sont un groupe alkyle ayant 1 à 5 atomes de carbone, m vaut 0 ou 1] dans une proportion pondérale ($a_1/a_2$) de 95/15 à 30/70 sur la base du $SiO_2$,
(B) 40 à 70 % en poids de poudre de zinc,
(C) 5 à 50 % en poids d'un pigment d'oxyde minéral que l'on a chauffé au moins à 500°C jusqu'à une perte au feu de 3 % en poids ;
les proportions des composants (A), (B) et (C) étant rapportées à un film séché.

2. Composition de revêtement selon la revendication 1, dans laquelle ladite poudre de zinc a une dimension de particules de 1 à 20 micromètres.

3. Composition de revêtement selon la revendication 1, dans laquelle ladite poudre de zinc est un alliage de zinc et d'autres métaux.

4. Composition de revêtement selon la revendication 1, dans laquelle ledit pigment d'oxyde minéral est de l'argile, du talc ou du mica.

5. Composition de revêtement selon la revendication 1, dans laquelle ledit pigment d'oxyde minéral a une taille de particules ne dépassant pas 20 micromètres.

6. Composition de revêtement selon la revendication 1, dans laquelle ledit film séché a une perte au feu, dans des conditions désoxygénées pendant 1 heure, ne dépassant pas 8%.